# FASCICULE DE BREVET EUROPEEN

(11) **EP 0 573 352 B1**
(45) Date de publication et mention de la délivrance du brevet: **28.08.1996**
(21) Numéro de dépôt: 93401404.4
(22) Date de dépôt: 02.06.1993
(51) Int. Cl.: B65G 47/84, B67C 3/24

(54) **Dispositif de chargement de récipients sur un élément de transport**
Einrichtung zum Laden von Behältern auf ein Transportglied
Device for loading containers onto a carrying member

(30) Priorité: 05.06.1992 FR 9206838
(43) Date de publication de la demande: 08.12.1993
(73) Titulaire: SIDEL, F- 76053 Le Havre Cedex (FR)
(72) Inventeur: Evrard, Alain, F-76600 Le Havre (FR)
(74) Mandataire: Gorrée, Jean-Michel

(56) Documents cités:
- DE-U- 9 017 262
- GB-A- 1 411 962
- US-A- 3 330 400
- US-A- 3 863 753

## Description

La présente invention concerne des perfectionnements apportés aux dispositifs de chargement de récipients présentant un goulot, notamment de bouteilles, sur un élément de transport circulaire ou en arc de cercle dans la zone de chargement, tel que mentionné dans le préambule de la revendication 1.

Dans les installations de fabrication et/ou de remplissage de récipients, le déplacement des récipients est couramment assuré par des roues de transfert dont de nombreuses réalisations sont connues. Toutefois, la seule fonction assurée par ces roues étant une fonction de transfert, elles ne sont pas mécaniquement structurées pour supporter des efforts, tels que des efforts verticaux engendrés par exemple par l'enfoncement à force d'un mandrin dans le goulot des récipients que ces roues supportent.

Par ailleurs, dans les fours de chauffage de la matière plastique constitutive des récipients, qui sont utilisés dans les installations de fabrication des récipients, le transfert des récipients peut être assuré par des plateaux à encoches qui saisissent les récipients et les amènent sous des mandrins en déplacement. Toutefois, dans ces installations connues, les mandrins se déplacent rectilinéairement : le transfert des récipients doit donc s'effectuer dans la zone de parcours rectilinéaire des mandrins et il en résulte un grand encombrement de l'installation.

Le document US-A-3 863 753 décrit un dispositif de chargement de récipients dans lequel les récipients sont soutenus, par leur fond, par des plateaux respectifs déplaçables verticalement pour amener les récipients au niveau de moyens de préhension agencés pour enserrer extérieurement les cols des récipients. Le fait que les récipients soient soutenus par leur fond implique que la distance entre le plateau de support et les moyens de préhension est prédéterminée pour une dimension donnée du récipient, et le traitement de récipients de tailles différentes nécessitent, à chaque fois, un réglage du dispositif. En outre, le déplacement vertical des récipients pour les amener au niveau des moyens de préhension conduit à une dimension verticale accrue, et donc à un encombrement important du dispositif. Enfin, la saisie extérieure des cols, par les moyens de préhension risque d'entraîner un endommagement de la paroi extérieure des cols, et notamment des filets de vissage destinés aux bouchons, rendant impossible un vissage correct des bouchons ; et il n'est pas possible d'écarter cet inconvénient en ayant recours à des moyens de préhension intérieure enfoncés à force dans les goulots car l'effort d'enfoncement risquerait de déformer irrémédiablement la paroi des corps des récipients qui est mince et donc fragile.

L'invention a essentiellement pour but d'améliorer les dispositifs de chargement en écartant les inconvénients présentés par les dispositifs antérieurs et, à ce titre, de proposer un dispositif de chargement perfectionné qui soit structuré mécaniquement pour supporter des efforts verticaux exercés sur les récipients pris en charge et qui soit réalisé dans une configuration compacte le rendant moins encombrant que certains dispositifs connus.

A ces fins, un dispositif de chargement du type cité au préambule, étant agencé conformément à l'invention, se caractérise essentiellement comme indiqué dans la partie caractérisante de la revendication 1.

Ainsi grâce aux dispositions conformes à l'invention, le plateau de recueil qui saisit les récipients à leur arrivée et les présente à l'élément de transport et l'élément de transport lui-même, au moins dans la partie de sa trajectoire en coïncidence avec le plateau de recueil, sont des structures tournantes superposées et l'étape de chargement des récipients depuis le plateau de recueil sur l'élément de transport s'effectue dans une partie de trajectoire en courbe (circulaire) : il en résulte une réduction de l'étendue longitudinale de l'installation équipée dudit dispositif de chargement.

De plus, l'étendue de ladite partie de trajectoire en courbe nécessaire au chargement étant relativement faible, on peut utiliser une portion subséquente de la trajectoire circulaire des récipients pris en charge par l'élément de transport -circulaire ou en arc de cercle- pour traiter ou commencer à traiter les récipients dans cette zone courbe. Il en résulte, là encore, une économie sur l'encombrement général de l'installation.

En outre, l'élément de transport peut être mécaniquement structuré de façon aussi résistante que souhaité, en particulier pour supporter des efforts verticaux tels que ceux engendrés par exemple par l'enfoncement à force d'un mandrin dans le goulot de chaque récipient.

Enfin, le fait que les récipients amenés par le plateau de recueil et les organes de préhension équipant l'élément de transport suivent des trajectoires circulaires sécantes, et non pas tangentes (tangence intérieure), réunit deux avantages :
- sur le plan géométrique, la coïncidence verticale de chaque organe de préhension et de chaque récipient est beaucoup mieux définie que dans le cas de trajectoires tangentes ;
- sur le plan mécanique, la coïncidence verticale peut être assurée de façon plus aisée et plus fiable dans le temps, tandis que des jeux inévitables apparaissant avec le temps rendraient plus aléatoire et moins fiable une coïncidence par trajectoires tangentes ; en outre des trajectoires sécantes permettent un dégagement plus rapide du plateau une fois le récipient pris en charge par l'élément de transport et évitent une interférence de pièces en mouvement dans certaines configurations de montage et d'emploi du dispositif de chargement.

De façon préférentielle, le plateau est agencé de manière telle que ses moyens de réception des récipients suivent une trajectoire circulaire ayant le susdit diamètre prédéterminé et l'axe de rotation du plateau est écarté de l'axe de rotation de l'élément de transport de façon à créer la susdite intersection des trajectoires respectives des organes de préhension et des moyens de réception. Un fonctionnement correct du dispositif est obtenu lorsque l'angle d'intersection des trajectoires respectives des moyens de réception du plateau et des organes de préhension de l'élément de transport est d'environ 2 à 5°, de préférence 3°.

De façon avantageuse, l'axe de rotation du plateau est décalé par rapport à l'axe de rotation de l'élément de transport de manière qu'au delà (dans le sens de rotation) de l'intersection des trajectoires de moyens de réception et des organes de préhension, les moyens de réception du plateau s'écartent des organes de préhension de l'élément de transport vers l'intérieur de la trajectoire en arc de cercle suivie par ces derniers, de façon que les moyens de réception déchargés de leurs récipients respectifs n'interfèrent plus avec lesdits récipients pris en charge par les organes de préhension, comme cela a été suggéré plus haut.

Dans un mode de réalisation préféré, le dispositif comporte :
- un arbre tournant vertical supportant l'élément de transport,
- une chape fixe de révolution traversée à libre rotation par ledit arbre et excentrée par rapport audit arbre, et
- un moyeu tournant monté à libre rotation autour de ladite chape, ce moyeu étant solidaire du plateau qui s'étend en-dessous de l'élément de transport.

Dans ce cas, il est avantageux de simplifier la conception du dispositif en prévoyant l'entraînement rotatif du plateau et de l'élément de transport à partir des mêmes moyens moteurs et, à cette fin, les moyens d'entraînement synchrone de l'élément de transport et du plateau comprennent :
- un moteur entraînant le susdit arbre en rotation,
- un arbre intermédiaire parallèle à l'arbre moteur supportant le susdit élément de transport et décalé par rapport à celui-ci;
- une première transmission de mouvement de rotation entre l'arbre moteur et l'arbre intermédiaire pour entraîner celui-ci en rotation,
- et une seconde transmission de mouvement de rotation entre l'arbre intermédiaire et le moyeu du plateau, les rapports de transmission des première et seconde transmissions étant tels que les organes de préhension de l'élément de transport et les moyens de réception du plateau se présentent respectivement successivement en synchronisme à la susdite intersection de leurs trajectoires respectives. De façon simple, les première et seconde transmissions de mouvement de rotation sont des transmissions à poulies et courroies.

Dans un exemple particulier de réalisation du dispositif, l'élément de transport comprend une chaîne sans fin de transport équipée desdits organes de préhension et une roue de support et d'entraînement de ladite chaîne sans fin tournant autour dudit axe de rotation, les susdits organes de préhension portés par la chaîne sans fin décrivant ladite trajectoire en arc de cercle d'un diamètre prédéterminé lorsque la chaîne passe sur ladite roue ; dans ce cas, l'arbre tournant vertical supporte la roue d'entraînement de la chaîne sans fin.

L'invention sera mieux comprise à la lecture de la description détaillée qui suit d'un mode préféré de réalisation donné uniquement à titre d'exemple non limitatif. Dans cette description, on se réfère aux dessins annexés sur lesquels :
- la figure 1 est une vue schématique de dessus d'un dispositif de chargement agencé conformément à l'invention;
- la figure 2 est une vue de côté, en coupe, du dispositif de chargement de la fig. 1 ; et
- la figure 3 est une vue en coupe d'un organe de préhension de récipients susceptible d'équiper le dispositif de chargement des fig. 1 et 2.

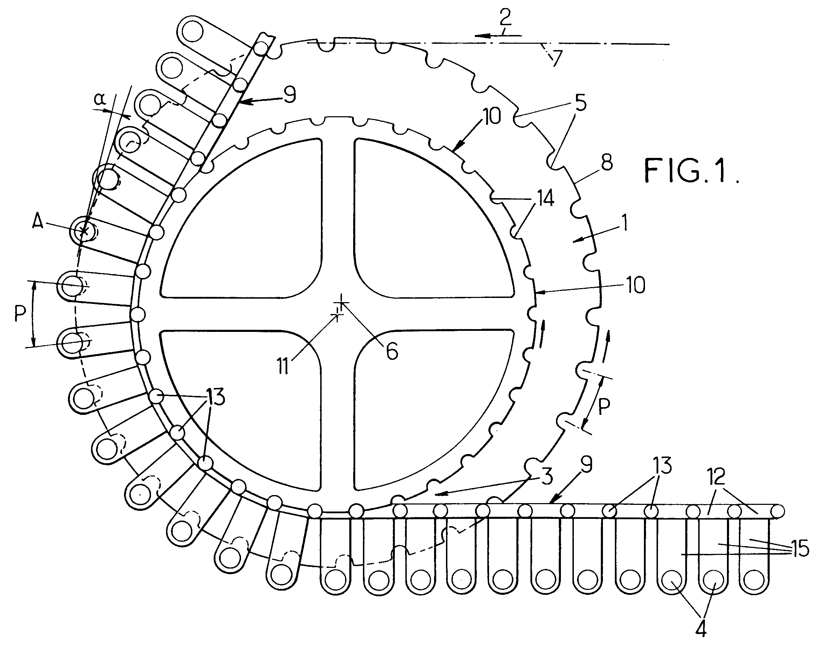

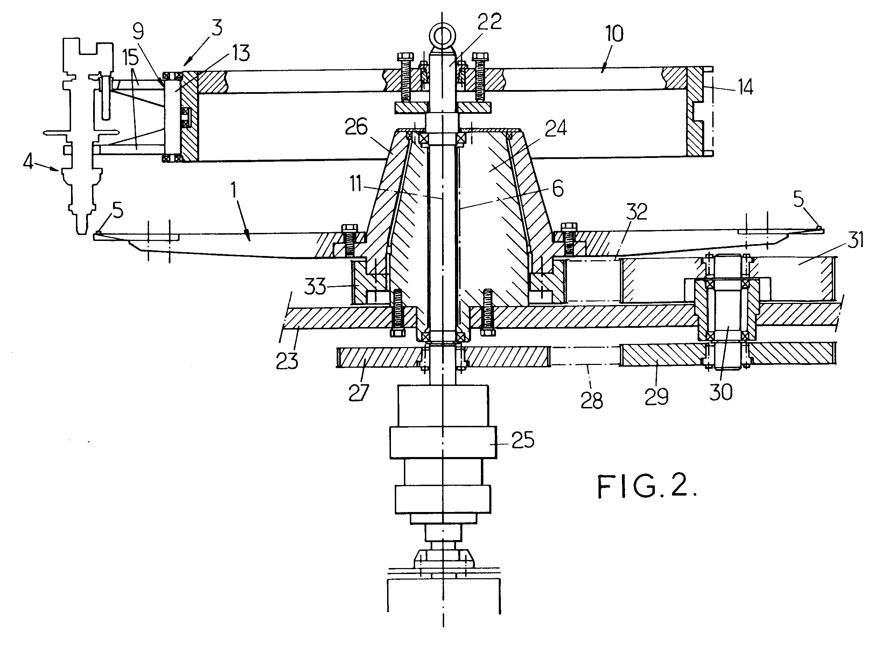

Le dispositif de chargement représenté aux fig. 1 et 2 comprend essentiellement un plateau tournant 1 de recueil des récipients, qui lui sont amenés tangentiellement (par exemple selon la flèche 2) par tout moyen d'alimentation connue de l'Homme de l'Art (par exemple système à vis sans fin appréhendant les récipients par leur corps), et un élément de transport 3 équipé d'organes 4 de préhension individuelle des récipients qui lui sont présentés par le plateau 1 ; l'élément de transport 3 est situé au-dessus du plateau de recueil 1 et tous deux tournent dans le même sens.

Les récipients possèdent un goulot (ce sont par exemple des bouteilles ou analogues) et ils sont amenés (selon la flèche 2) les uns à la suite des autres selon la trajectoire d'axe 7 en étant écartés les uns des autres selon un pas prédéterminé P par des moyens de mise au pas (non montrés).

Le plateau de recueil 1, qui tourne autour d'un axe 6, présente, tout au long de son bord périphérique 8, des moyens de réception des goulots des récipients constitués par une suite d'encoches 5 mutuellement espacées circonférentiellement d'un pas ayant également la valeur P précitées. Ces encoches sont aptes à recevoir les goulots des récipients et à soutenir lesdits récipients grâce à une collerette annulaire saillante entourant les goulots et prenant appui sur le bord des encoches.

Dans l'exemple considéré, l'élément de transport 3 est essentiellement constitué par une structure articulée fermée sur elle-même et formant une chaîne sans fin 9 à maillons mutuellement pivotants dont chacun est agencé pour supporter un récipient par son goulot. Ledit élément de transport comprend en outre une roue d'entraînement 10 de relativement grand diamètre sur laquelle s'enroule la chaîne sans fin 9 et qui est agencé pour supporter et entraîner celle-ci, ainsi que des moyens moteurs assurant l'entraînement synchrone des moyens de mise au pas 7 et de la roue d'entraînement 10 qui tourne autour d'un axe 11.

Pour ce qui est de la chaîne de transport 9, elle est constituée d'une succession de chaînons 12 articulés à libre rotation les uns aux autres par des pivots 13 de gros diamètre qui sont aptes à s'emboîter dans des encoches radiales 14 prévues à la périphérie de la roue 10, laquelle assure ainsi le support et l'entraînement de la chaîne 9. Chaque chaînon 12 est muni d'un bras transversal 15 dirigé radialement vers l'extérieur (considéré lorsque la chaîne s'enroule sur la roue 10). Chaque bras est muni à son extrémité libre d'un organe 4 de préhension d'un récipient par son goulot.

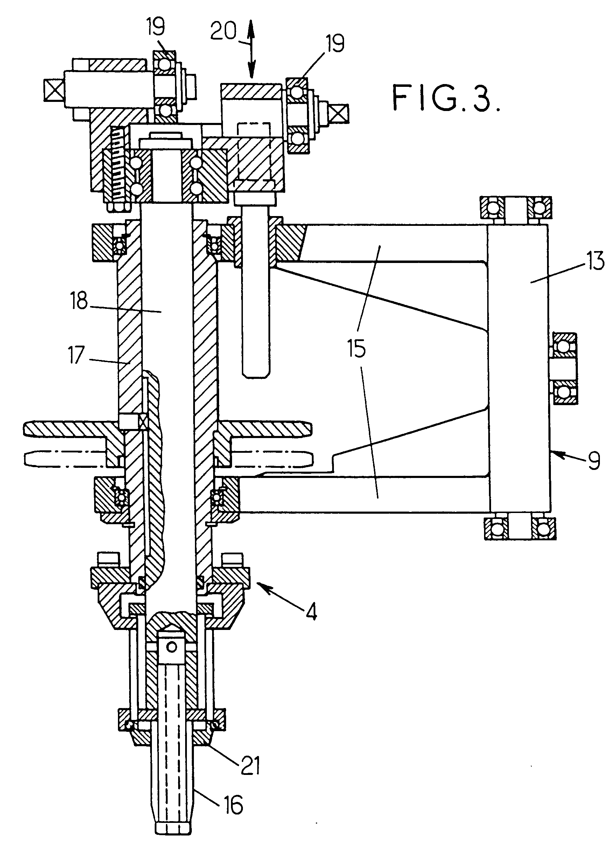

Pour fixer les idées, la fig. 3 montre un exemple de réalisation d'un organe de préhension 4 susceptible d'être utilisé dans le cadre de la présente invention, en particulier, mais non exclusivement, en étant monté aux extrémités des bras 15 de la chaîne de transport 9. Chaque organe de préhension 4 comprend un mandrin vertical 16 mobile dans un fourreau 17 supporté à libre rotation par le bras 15. L'extrémité supérieure d'une tige 18 prolongeant le mandrin 16 à travers le fourreau 17 et faisant saillie vers le haut au-delà de ce dernier est pourvue de galets 19 aptes à coopérer avec des cames latérales fixes (non montrées) pour soulever et abaisser (double flèche 20) séquentiellement le mandrin 16. Chaque mandrin 16 a un diamètre extérieur calibré correspondant ou légèrement inférieur au diamètre intérieur que doit présenter le goulot du récipient. Pour la préhension (ou "vétissage") d'un récipient par son goulot, le mandrin 16 est enfoncé à force dans le goulot du récipient jusqu'à ce qu'une butée annulaire 21, entourant le mandrin 16 et portée par l'extrémité inférieure du fourreau 17, vienne en contact avec le bord du goulot. Ainsi enfoncé, le mandrin est apte à supporter le récipient.

On notera que, conformément à l'invention, la trajectoire circulaire suivie par les moyens de réception prévus sur le plateau de recueil et la trajectoire circulaire ou en arc de cercle suivie par l'axe des organes de préhension supportés par l'élément de transport ont le même rayon. De ce fait, dans l'exemple de réalisation plus particulièrement décrit plus haut, le diamètre de la roue dentée 10, la longueur des chaînons 12 et la longueur des bras 15 sont déterminés de manière telle que, dès que la chaîne s'enroule sur la roue 10, les extrémités des bras radiant 15 s'écartent les uns des autres avec un entre-axe de valeur P correspondant à l'entre-axe avec lequel les récipients sous-jacents sont amenés par le plateau de recueil 1.

En outre, l'axe 11 de la roue d'entraînement 10 est décalé par rapport à l'axe 6 du plateau de recueil 1 de manière que les trajectoires circulaires ou en arc de cercle précitées s'intersectent (en projection verticale) sous un angle α compris entre 2 et 5°, de préférence d'environ 3°, en un point A géographiquement fixe. L'entraînement en rotation de la roue 10 et l'entraînement en rotation du plateau 1 sont synchronisés de manière telle qu'un organe de préhension 4 et une encoche 5 du plateau de recueil se présentent en synchronisme, au point A, à l'aplomb l'un de l'autre ; de plus des cames (non montrées) commandent en ce point précis la descente du mandrin 16 préalablement remonté en position effacée (double flèche 20 sur la fig. 3) et son emmanchement dans le goulot du récipient sous-jacent.

On notera également qu'il est souhaitable que l'axe de rotation 6 du plateau 1 soit décalé par rapport à l'axe de rotation 11 de la roue d'entraînement 10 d'une manière telle qu'au-delà du point A d'intersection des trajectoires des moyens de réception du plateau et des organes de préhension des moyens de transport, le bord 8 du plateau 1 et les moyens de réception des goulots qui y sont prévus s'écartent des organes de préhension vers l'intérieur de la trajectoire en arc de cercle suivie par ces derniers, de façon que les moyens de réception déchargés de leurs récipients respectifs n'interfèrent plus avec lesdits récipients pris en charge par les organes de préhension.

Un tel agencement se révèle nécessaire en particulier dans la configuration représentée aux fig. 1 et 2 d'une chaîne sans fin équipée de bras radiants en raison de la réduction du pas d'espacement des extrémités desdits bras, et donc des récipients qu'ils supportent, entre la partie courbe de la trajectoire et la partie rectilinéaire qui lui fait suite.

Par souci de simplification de la structure tout en assurant la synchronisation souhaitée des rotations de la roue 10 et du plateau 1, la roue 10 et le plateau 1 sont mûs à partir d'un même et unique organe moteur en mettant en oeuvre l'agencement de transmission représenté à la figure 2.

La roue 10 d'entraînement de la chaîne sans fin 9 est supportée à l'extrémité supérieure d'un arbre 22 sensiblement vertical (et matérialisant l'axe de rotation de ladite roue) dont elle est solidaire en rotation. Cet arbre est supporté lui-même sur le bâti 23 de la machine par un support fixe 24 dont il sera question plus loin, support qu'il traverse à libre rotation, et l'extrémité inférieure de l'arbre 22 est solidaire de moyens moteurs d'entraînement 25.

Le support fixe ou chape 24 présente une forme extérieure tronconique et on notera surtout qu'il n'est pas coaxial à l'arbre 22, mais que son axe est excentré par rapport à celui-ci. Sur la surface externe tronconique du support 24 prend appui, à libre rotation, le moyeu 26 de forme complémentaire du plateau de recueil 1 qui, compte tenu de cet agencement, est situé sous la roue 10 et tourne autour de l'axe du support tronconique (qui est l'axe de rotation 6 précité) décalé par rapport à l'axe 11 de la roue 10.

L'entraînement en rotation du plateau de recueil 1 s'effectue, à partir de l'arbre moteur 22, par une première roue 27 calée sur celui-ci qui, à l'aide d'une courroie 28 entraîne une deuxième roue 29 d'axe parallèle calée sur une extrémité d'un arbre intermédiaire 30 supporté par le bâti 3. Sur l'autre extrémité de l'arbre 30 est calée une troisième roue 31 qui, par une courroie 32, entraîne une quatrième roue 33 d'axe 6 et solidaire du moyeu 26 du plateau de recueil 1.

Les rapports de transmission de l'ensemble 27, 28, 29 et de l'ensemble 31, 32, 33 étant tels que les organes de préhension 4 et les moyens de réception 5 du plateau se présentent respectivement successivement en synchronisme au point A.

On comprendra que l'élément de transport qui, dans l'exemple précédemment décrit et représenté aux figures 1 et 2, est constitué sous forme d'une chaîné sans fin supportée par une roue d'entraînement peut se présenter sous la forme d'une simple roue de transport ayant le diamètre requis : quelle que soit la réalisation adoptée, il suffit que les organes de préhension suivent, dans la zone de chargement, une trajectoire en arc de cercle de même rayon que le plateau, centrée sur axe décalée par rapport à l'axe de rotation dudit plateau.

De même, les organes de préhension peuvent être constitués sous toute autre forme que celle prise en exemple et représentée à la figure 3.

## Revendications

1. Dispositif de chargement de récipients présentant un goulot, notamment de bouteilles, sur un élément de transport (3) circulaire ou en arc de cercle dans la zone de chargement des récipients, ledit élément de transport tournant dans un sens donné autour d'un axe de rotation (11) et étant équipé d'organes (4) de préhension placés sous la dépendance de moyens de commande pour la préhension individuelle desdits récipients par leur goulot, ces organes de préhension (4) décrivant, dans la zone de chargement des récipients, une trajectoire en arc de cercle d'un diamètre prédéterminé autour dudit axe et étant mutuellement espacés d'un pas prédéterminé (P) ; des moyens de délivrance amenant (en 2,7) audit dispositif les récipients les uns à la suite des autres en étant espacés du susdit pas ; un plateau tournant étant muni à ou vers sa périphérie de moyens (5) de réception individuelle des récipients qui présentent un pas d'espacement mutuel identique au susdit pas prédéterminé (P), ledit plateau (1) étant situé au-dessous dudit élément de transport (3) et tournant dans le même sens que celui-ci autour d'un axe (6) ; et des moyens d'entraînement synchrone étant prévus pour l'entraînement synchrone en rotation de l'élément de transport (3) et du plateau (1);
caractérisé en ce qu'en outre :
- ledit plateau tournant (1) recueille les récipients amenés au dispositif par lesdits moyens de délivrance, lesdits moyens (5) de réception dont est pourvu le plateau recevant les cols des récipients, le plateau (1) étant situé approximativement à hauteur des cols de récipients amenés par les susdits moyens de délivrance et son axe (6) de rotation étant parallèle à celui dudit élément de transport, le diamètre du plateau et les positions respectives desdits axes de l'élément de transport et du plateau étant tels qu'en projection plane la trajectoire circulaire des moyens (5) de réception du plateau intersecte (en A) la trajectoire en arc de cercle des organes de préhension de l'élément de transport,
- les susdits moyens de commande des organes (4) de préhension de l'élément de transport (3) étant agencés de manière à commander lesdits organes de préhension (4) pour qu'ils saisissent respectivement les goulots des récipients au moment où ils passent à la susdite intersection (A) des trajectoires précitées,
- et lesdits moyens d'entraînement synchrone en rotation de l'élément de transport (3) et du plateau de recueil (1) étant agencés de manière que les organes (4) de préhension de l'élément de transport se présentent successivement, à la susdite intersection des trajectoires, en synchronisme avec les moyens (5) de réception du plateau.

2. Dispositif selon la revendication 1, caractérisé en ce que le plateau (1) est agencé de manière telle que ses moyens (5) de réception des récipients suivent une trajectoire circulaire ayant le susdit diamètre prédéterminé et en ce que l'axe (6) de rotation du plateau est écarté de l'axe de rotation de l'élément de transport de façon à créer la susdite intersection des trajectoires respectives des organes de préhension et des moyens de réception.

3. Dispositif selon la revendication 2, caractérisé en ce que l'angle d'intersection des trajectoires respectives des moyens de réception du plateau et des organes de préhension de l'élément de transport est compris entre 2 et 5°, de préférence 3°.

4. Dispositif selon l'une quelconque des revendications 1 à 3, caractérisé en ce que l'axe (6) de rotation du plateau est décalé par rapport à l'axe (11) de rotation de l'élément de transport de manière qu'au delà (dans le sens de rotation) de l'intersection des trajectoires de moyens de réception et des organes de préhension, les moyens de réception (5) du plateau s'écartent des organes de préhension (4) de l'élément de transport vers l'intérieur de la trajectoire en arc de cercle suivie par ces derniers, de façon que les moyens de réception déchargés de leurs récipients respectifs n'interfèrent plus avec lesdits récipients pris en charge par les organes de préhension.

5. Dispositif selon l'une quelconque des revendications 2 à 4, caractérisé en ce qu'il comporte :
- un arbre tournant vertical (22) supportant l'élément de transport (3),
- une chape fixe de révolution (24) traversée à libre rotation par ledit arbre (22) et excentrée par rapport audit arbre, et
- un moyeu tournant (26) monté à libre rotation autour de ladite chape (24), ce moyeu (26) étant solidaire du plateau (1) qui s'étend en-dessous de l'élément de transport (3).

6. Dispositif selon la revendication 5, caractérisé en ce que les moyens d'entraînement synchrone de l'élément de transport et du plateau comprennent :
- un moteur (25) entraînant ledit arbre (22) en rotation,
- un arbre intermédiaire (30) parallèle à l'arbre moteur supportant le susdit élément de transport et décalé par rapport à celui-ci;
- une première transmission de mouvement de rotation (27, 28, 29) entre l'arbre moteur (22) et l'arbre intermédiaire (30) pour entraîner celui-ci en rotation,
- et une seconde transmission de mouvement de rotation (31, 32, 33) entre l'arbre intermédiaire (30) et le moyeu (26) du plateau (1),
les rapports de transmission des première et seconde transmissions étant tels que les organes de préhension de l'élément de transport et les moyens de réception du plateau se présentent respectivement successivement en synchronisme à la susdite intersection de leurs trajectoires respectives.

7. Dispositif selon la revendication 6, caractérisé en ce que les première et seconde transmissions de mouvement de rotation sont des transmissions à poulies et courroies.

8. Dispositif selon l'une quelconque des revendications 1 à 7, caractérisé en ce que l'élément de transport (3) comprend une chaîne sans fin de transport (9) équipée desdits organes de préhension (4) et une roue (10) de support et d'entraînement de ladite chaîne sans fin tournant autour dudit axe de rotation (11), les susdits organes de préhension (4) portés par la chaîne sans fin (9) décrivant ladite trajectoire en arc de cercle d'un diamètre prédéterminé lorsque la chaîne passe sur ladite roue.

9. Dispositif selon les revendications 5 et 8, caractérisé en ce que l'arbre tournant vertical (22) supporte la roue (10) d'entraînement de la chaîne sans fin (9).

## Claims

1. Apparatus for loading containers having necks, particularly bottles, on a circular or arc-shaped conveyor (3) in the container-loading area, said conveyor rotating in a given direction around an axis of rotation (11) and being provided with gripping devices (4) disposed under the control of control means for individually gripping said containers by the necks thereof, said gripping devices (4) following, in the container-loading area, an arc-shaped path having a predetermined diameter around said axis and being mutually spaced with a predetermined pitch (P) ; feeding means feeding (2, 7) containers in succession to said apparatus while being mutually spaced with said pitch ; a rotatable disk being provided at or near a periphery thereof with indiidual container-housing means (5) having a mutual spacing pitch identical to said predetermined pitch (P), said disk being located beneath said conveyor (3) and rotating in the same direction thereas around an axis (6) ; and synchronous driving means being provided for synchronously rotationally driving the conveyor (3) and the disk (1) ;
characterized in that furthermore :
- said rotatable disk (1) picks up containers fed to the apparatus by said feeding means, said receiving means (5) being provided on the disk receiving container necks, the disk (1) being located approximately at the level of the necks of the containers fed by said feeding means and its rotation axis being parallel to the axis of said conveyor, the disk diameter and the respective positions of said axis of the conveyor and of the disk being such that in a top view the circular path of the receiving means (5) of the disk intersects (A) the arc-shaped path of the gripping means of the conveyor,
- said control means of the gripping devices (4) of the conveyor (3) being arranged so as to control said gripping devices (4) for gripping respectively the container necks just as they are passing said intersection (A) of said paths,
- and said means for synchronously rotationally driving the conveyor (3) and the picking-up disk (1) being arranged in such a manner that the receiving devices (4) of the conveyor come in succession, at said intersection of the paths, synchronously with the receiving means (5) of the disk.

2. Apparatus according to claim 1, characterized in that said disk (1) is arranged so that the container-housing means (5) follow a circular path having said predetermined diameter and the axis (6) of rotation of the disk is spaced apart from the axis of rotation of the conveyor so as to form said point of intersection of the respective paths of the gripping devices and the housing means.

3. Apparatus according to claim 2, characterized in that the angle of intersection of the respective paths of said housing means of the disk and said gripping devices of the conveyor is between 2 and 5°, and preferably 3°.

4. Apparatus according to anyone of claims 1 to 3, characterized in that the axis (6) of rotation of the disk is offset in relation to the axis (11) of rotation of the conveyor, so that, beyond (in the rotation direction) the point of intersection of saids paths of housing means and gripping devices, the housing means (5) of the disk move away from the gripping devices (4) of the conveyor toward the inside of the arc-shaped path followed by said latter, such that the housing means from which the respective containers have been unloaded no longer interfere with said containers grasped by the gripping devices.

5. Apparatus according to anyone of claims 2 to 4, characterized in that it comprises :
- a vertical rotatable shaft (22) supporting said conveyor (3) ;
- a stationary revolution-shaped cap (24) through which said shaft passes in free rotation and which is offset in relation to said shaft ; and
- a revolving hub (26) mounted in free rotation around said cap (24), said hub (26) being fastened to the disk (1), which is disposed below the conveyor (3).

6. Apparatus according to claim 5, characterized in that the synchronous drive means actuating said conveyor and said disk comprise :
- a motor (25) for driving said shaft in rotation ;
- an intermediate shaft (30) parallel to said motor driven shaft supporting said conveyor and offset in relation thereto ;
- a first rotational-motion transmission (27, 28, 29) between the drive shaft (22) and the intermediate shaft (30) to drive the intermediate shaft in rotation ;
- and a second rotational-motion transmission (31, 32, 33) between the intermediate shaft (30) and the hub (26) of the disk (1),
the transmission ratios of the first and second transmissions being such that the gripping devices of the conveyor and the housing means of the disk reach respectively in succession synchronously the point of intersection of their respective paths.

7. Apparatus according to claim 6, characterized in that said first and second rotational-motion transmissions are belt-and-pulley transmissions.

8. Apparatus according to anyone of claims 1 to 7, characterized in that said conveyor (3) comprises an endless conveyor chain (9) equipped with said gripping devices (4), and a wheel (10) supporting and driving said endless chain rotating around said axis of rotation (11), said gripping devices (4) supported by said endless chain (9) describing said arc-shaped path having a predetermined diameter when said chain travels over said wheel.

9. Apparatus according to claims 5 and 8, characterized in that said vertical rotating shaft (22) supports said wheel (10) driving said endless chain (9).

## Patentansprüche

1. Vorrichtung zum Laden von Behältern mit Hals, insbesondere von Flaschen, auf ein kreisförmiges bzw. kreisbogenförmiges Transportelement (3) in der Ladezone der Behälter, wobei sich das Transportelement in einer gegebenen Richtung um eine Drehachse (11) dreht und mit Greiforganen (4) ausgestattet ist, die so in die Abhängigkeit von Steuermitteln gestellt sind, daß die Ergreifung der Behälter einzeln an ihrem Hals erfolgt, wobei die Greiforgane (4) in der Ladezone der Behälter eine kreisbogenförmige Bahn von vorbestimmtem Durchmesser um die Achse herum beschreiben und in einem vorbestimmten Schrittabstand (P) zueinander liegen; wobei Belieferungsmittel (bei 2, 7) der Vorrichtung die Behälter einzeln nacheinander im oben genannten Schrittabstand zuführen; wobei eine Drehscheibe an oder in Richtung ihres Umfanges mit Mitteln (5) zur Einzelaufnahme der Behälter versehen ist, die zueinander einen mit dem oben genannten Schrittabstand (P) identischen Schrittabstand aufweisen, wobei die Scheibe (1) unterhalb des Transportelementes (3) angeordnet ist und in gleicher Richtung wie dieses um eine Achse (6) dreht; und wobei Synchron-Antriebsmittel für einen synchronen Drehantrieb des Transportelementes (3) und der Scheibe (1) vorgesehen sind; dadurch gekennzeichnet, daß ferner:
- die Drehscheibe (1) die der Vorrichtung durch die Belieferungsmittel zugeführten Behälter sammelt, wobei die Aufnahmemittel (5), mit denen die Scheibe versehen ist, die Hälse der Behälter aufnehmen, die Scheibe (1) in etwa auf der Höhe der Hälse der durch die oben genannten Belieferungsmittel zugeführten Behälter angeordnet ist und ihre Drehachse (6) parallel zu der des Transportelementes ist, der Durchmesser der Scheibe und die jeweiligen Positionen der Achsen des Transportelementes und der Scheibe so gewählt sind, daß in Draufsicht die Kreisbahn der Aufnahmemittel (5) der Scheibe die kreisbogenförmige Bahn der Greiforgane des Transportelementes schneiden (bei A),
- die oben genannten Steuermittel der Greiforgane (4) des Transportelementes (3) derart ausgebildet sind, daß sie die Greiforgane (4) so steuern, daß diese jeweils die Hälse der Behälter in dem Moment ergreifen, in welchem diese an die oben genannte Schnittstelle (A) der vorerwähnten Bahnen gelangen,
- und die Synchron-Drehantriebsmittel des Transportelementes (3) und der Sammelscheibe (1) derart ausgebildet sind, daß sich die Greiforgane (4) des Transportelementes an der oben genannten Schnittstelle der Bahnen synchron mit den Aufnahmemitteln (5) der Scheibe nacheinander anbieten.

2. Vorrichtung nach Anspruch 1,
dadurch gekennzeichnet,
daß die Scheibe (1) derart ausgebildet ist, daß ihre Aufnahmemittel (5) für die Behälter einer Kreisbahn folgen, die den oben genannten vorbestimmten Durchmesser hat, und daß die Drehachse (6) der Scheibe getrennt von der Drehachse des Transportelementes ist, um die oben genannte Schnittstelle der jeweiligen Bahnen der Greiforgane und der Aufnahmemittel zu erzeugen.

3. Vorrichtung nach Anspruch 2,
dadurch gekennzeichnet,
daß der Schnittwinkel der jeweiligen Bahnen der Aufnahmemittel der Scheibe und der Greiforgane des Transportelementes zwischen 2 und 5°, vorzugsweise 3°, liegt.

4. Vorrichtung nach einem der Ansprüche 1 bis 3,
dadurch gekennzeichnet,
daß die Drehachse (6) der Scheibe gegenüber der Drehachse (11) des Transportelementes derart versetzt ist, daß sich die Aufnahmemittel (5) der Scheibe (in Drehrichtung) hinter der Schnittstelle der Bahnen der Aufnahmemittel und der Greiforgane von den Greiforganen (4) des Transportelementes von der kreisbogenförmigen Bahn der letzteren nach innen entfernen, so daß die von ihren jeweiligen Behältern befreiten Aufnahmemittel nicht weiter die von den Greiforganen übernommenen Behälter beeinflussen.

5. Vorrichtung nach einem der Ansprüche 2 bis 4,
dadurch gekennzeichnet,
daß sie umfaßt:
- eine das Transportelement (3) tragende, senkrecht drehende Welle (22),
- eine rotationsfeste Abdeckhaube (24), die von der Welle (22) frei drehend durchquert wird und in bezug zur Welle exzentrisch angeordnet ist, und
- eine drehende Nabe (26), die um die Abdeckhaube (24) herum frei drehbar angebracht ist, wobei diese Nabe (26) mit der Scheibe (1), die sich unterhalb des Transportelementes (3) erstreckt, starr verbunden ist.

6. Vorrichtung nach Anspruch 5,
dadurch gekennzeichnet,
daß das Synchron-Antriebsmittel des Transportelementes und der Scheibe umfaßt:
- einen die Welle (22) in Drehung versetzenden Motor (25),
- eine Nebenwelle (30), parallel zu der das oben genannte Transportelement tragenden Antriebswelle und versetzt zu dieser;
- eine erste Einrichtung zur Drehbewegungsübertragung (27, 28, 29) zwischen der Antriebswelle (22) und der Nebenwelle (30), um diese in Drehung zu versetzen,
- und eine zweite Einrichtung zur Drehbewegungsübertragung (31, 32, 33) zwischen der Nebenwelle (30) und der Nabe (26) der Scheibe (1),
wobei die Übersetzungen der ersten und der zweiten Übertragungeinrichtung so gewählt sind, daß sich die Greiforgane des Transportelementes und die Aufnahmemittel der Scheibe an der oben genannten Schnittstelle ihrer jeweiligen Bahnen jeweils synchron nacheinander anbieten.

7. Vorrichtung nach Anspruch 6,
dadurch gekennzeichnet,
daß die erste und die zweite Einrichtung zur Drehbewegungsübertragung Einrichtungen mit Scheiben- und Riemenübertragung sind.

8. Vorrichtung nach einem der Ansprüche 1 bis 7,
dadurch gekennzeichnet,
daß das Transportelement (3) eine mit den Greiforganen (4) ausgestattete endlose Transportkette (9) und ein sich um die Drehachse (11) drehendes Stütz- und Antriebsrad (10) der Endloskette umfaßt, wobei die von der Endloskette (9) getragenen, oben genannten Greiforgane (4) die Kreisbogenbahn mit dem vorbestimmten Durchmesser beschreiben, wenn die Kette auf dem Rad läuft.

9. Vorrichtung nach den Ansprüchen 5 und 8,
dadurch gekennzeichnet,
daß die senkrecht drehende Welle (22) das Antriebsrads (10) der Endloskette (9) trägt.
